# FASCICULE DE BREVET EUROPEEN

(11) **EP 4 230 474 B1**
(45) Date de publication et mention de la délivrance du brevet: **15.01.2025**
(21) Numéro de dépôt: 23153480.1
(22) Date de dépôt: 26.01.2023
(51) Int. Cl.: B60N 2/02

(54) **SYSTÈME ET PROCÉDÉ DE RÉGLAGE D'UN SIÈGE DE CONDUCTEUR D'UN VÉHICULE AUTOMOBILE**
SYSTEM UND VERFAHREN ZUR EINSTELLUNG EINES FAHRERSITZES EINES KRAFTFAHRZEUGS
SYSTEM AND METHOD FOR ADJUSTING A DRIVER'S SEAT OF A MOTOR VEHICLE

(30) Priorité: 18.02.2022 FR 2201485
(43) Date de publication de la demande: 23.08.2023
(73) Titulaire: Renault s.a.s, 92100 Boulogne Billancourt (FR)
(72) Inventeur: CAMPANA, Samuel, 78280 Guyancourt (FR); LESBATS, Fabrice, 78280 Guyancourt (FR)

(56) Documents cités:
- EP-A1- 3 703 972
- US-A1- 2020 017 000

## Description

La présente invention concerne la gestion de la position de conduite d'un véhicule automobile. Elle concerne en particulier l'adaptation de la position du conducteur, lorsque le véhicule est en marche. Le système ne concerne pas la phase de conduite autonome des véhicules autonomes. Le système ne concerne pas les véhicules dans lesquels le conducteur pourrait être déconnecté d'une position de conduite en cours de roulage.

Les sièges des véhicules, et plus particulièrement le siège du poste de conduite, sont en effet réglables selon plusieurs degrés de liberté. C'est ainsi qu'il est possible de régler la position longitudinale du siège, son inclinaison, sa hauteur, de régler l'inclinaison du dossier, de l'assise,

Les divers réglages de la position du siège sont facilités lorsque les réglages s'effectuent électriquement.

Il a par ailleurs été proposé de régler la position de conduite en fonction de divers paramètres.

Le document DE102013004811 propose à cet égard de régler automatiquement certains accessoires de conduite tels que le rétroviseur, le volant et le siège en fonction de la morphologie du conducteur.

Généralement, un tel réglage de la position d'un siège conducteur n'est possible qu'à l'arrêt, pour des raisons de sécurité, afin d'éviter la perte de contact avec la pédale de frein.

Cependant, lorsque le conducteur envisage de modifier le confort ou la position de conduite lors du roulage, il reste souhaitable de pouvoir modifier le réglage du siège conducteur, de manière manuelle tout en garantissant la sécurité en s'assurant que le conducteur reste maitre de son véhicule, c'est-à-dire que le pied du conducteur reste en contact avec les pédales, notamment la pédale de freinage. Ainsi, notamment lorsque le réglage s'effectue par commande électrique au moyen d'un bouton de commande, il est souhaitable que l'on puisse éviter en cas d'appui malencontreux sur le bouton de réglage, par exemple en cas d'appui d'un objet débordant d'un rangement de portière, que l'occupant subisse une activation du réglage de son siège non voulue et perde la commande du véhicule, en particulier la liaison avec la pédale de frein. Le document US2020017000 divulgue un système de réglage d'un siège conducteur de véhicule automobile, comprenant un calculateur, un ensemble d'actionneurs de siège commandés par le calculateur et une interface homme-machine reliée au calculateur pour commander le réglage de siège, tel qu'il comporte des moyens pour limiter à une valeur maximale de temps de déplacement le temps de déplacement du siège, lorsque le courant d'alimentation de l'actionneur est trop élevé.

La présente invention apporte une solution aux problèmes indiqués.

A cet effet, l'invention a pour objet un système de réglage d'un siège conducteur de véhicule automobile, en particulier un système de réglage de la position de conduite d'un siège conducteur de véhicule automobile, comprenant un calculateur, un ensemble d'actionneurs du siège commandés par le calculateur et une interface homme-machine reliée au calculateur pour commander le réglage du siège, le système de réglage comportant des moyens pour limiter à une valeur maximale de temps de déplacement, le temps de déplacement du siège, lorsque le véhicule est en marche et lorsque la commande de réglage du siège est activée sur l'interface homme-machine pendant un temps d'activation. Ainsi, lorsque le siège est réglé lorsque le véhicule est en marche, le temps de déplacement du siège est limité temporellement, correspondant à un déplacement limité dans l'espace, permettant au conducteur de rester maitre de son véhicule.

Dans un mode de réalisation, le système de réglage d'un siège conducteur de véhicule automobile, en particulier système de réglage de la position de conduite d'un siège conducteur de véhicule automobile muni de pédales, comprend un calculateur , un ensemble d'actionneurs du siège commandés par le calculateur et une interface homme-machine reliée au calculateur pour commander le réglage du siège, le système de réglage comportant des moyens pour limiter à une valeur maximale de temps de déplacement, le temps de déplacement du siège lorsque le véhicule est en marche et lorsque la commande de réglage est activée sur l'interface homme-machine pendant un temps d'activation, garantissant que le pied du conducteur reste en contact avec les pédales. Ainsi, lorsque le siège est réglé lorsque le véhicule est en marche, et que le véhicule comprend des pédales, le temps de déplacement du siège est limité temporellement, correspondant à un déplacement limité dans l'espace, permettant au conducteur de rester maitre de son véhicule, c'est-à-dire de garder au moins un pied en contact avec les pédales, la pédale de frein notamment.

Dans des formes de réalisation préférées de l'invention, on a en outre recours à l'une et/ou à l'autre des caractéristiques suivantes prises seules ou en combinaison:
- L'interface homme machine du système de réglage est un bouton de commande et l'activation de la commande de réglage est réalisée par un appui pendant un temps d'activation sur le bouton de commande.
- Le temps de déplacement du siège est égal à la valeur maximale de temps de déplacement lorsque le temps d'activation est supérieur à la valeur maximale de temps de déplacement.
- La valeur maximale de temps de déplacement est sensiblement égale à deux secondes.

L'invention a également pour objet un procédé de réglage d'un siège conducteur de véhicule automobile, en particulier un procédé de réglage de la position de conduite d'un siège conducteur de véhicule automobile, dans lequel on commande le déplacement du siège en fonction d'une activation réalisée à partir d'une interface homme-machine pendant un temps d'activation t, on règle le déplacement du siège lorsque le véhicule est en marche et on limite le temps de déplacement du siège au bout d'un temps d'activation supérieur à une valeur maximale de temps de déplacement. La limitation temporelle du temps de déplacement correspond à un déplacement du siège dans l'espace permettant au conducteur de rester maitre de son véhicule.

Dans un mode de réalisation préféré, le procédé de réglage d'un siège conducteur est relatif à un véhicule automobile muni de pédales, dans lequel on commande le déplacement du siège en fonction d'une activation réalisée à partir d'une interface homme-machine pendant un temps d'activation, on règle le siège lorsque le véhicule est en marche et on limite le temps de déplacement du siège au bout d'un temps d'activation supérieur à une valeur maximale de temps de déplacement, garantissant que le pied du conducteur reste en contact avec les pédales. La valeur maximale de temps de déplacement correspond à un déplacement du siège dans l'espace permettant au conducteur de rester maitre de son véhicule, en particulier il permet au conducteur de garder un pied à proximité des pédales dans le cas d'un véhicule muni de pédales.

Avantageusement, l'interface homme machine est un bouton de commande et l'activation est réalisée par un appui pendant un temps d'activation sur le bouton de commande.

Avantageusement, le procédé peut en outre comporter une étape d'avertissement du conducteur lorsque le calculateur détecte un temps d'activation supérieur à la valeur maximale de temps de déplacement.

De façon préférentielle, la valeur maximale de temps de déplacement est égale à deux secondes.

L'invention concerne aussi un véhicule automobile comprenant un système de réglage d'un siège selon les caractéristiques précédentes.

D'autres buts, avantages et caractéristiques de l'invention apparaîtront à la lecture de la description suivante, donnée à titre d'exemple non limitatif et faite en référence aux dessins annexés sur lesquels :
[Fig. 1] est un schéma représentatif des éléments constitutifs d'un système de réglage d'un siège conducteur selon l'invention,
[Fig. 2] est une vue d'un occupant installé dans le poste de conduite,
[Fig. 3] est une vue agrandie du bouton de commande de la figure 2,
[Fig. 4] est une vue du poste de conduite avec portière ouverte et un objet susceptible d'interférer avec les commandes,
[Fig. 5] est un ordinogramme illustrant les principales étapes d'un procédé mis en oeuvre par le dispositif selon l'invention.

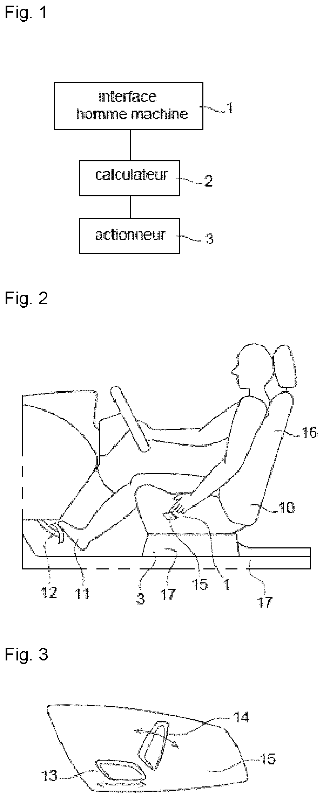

On a représenté sur la figure 1 les éléments constitutifs d'un système de réglage de la position d'un siège conducteur de véhicule automobile. Ce système est destiné à permettre le réglage de la position du siège conducteur d'un véhicule automobile à réglage électrique. En détail, le système de réglage comprend une interface homme machine 1, un calculateur 2 et un actionneur 3.

Le système permet le réglage de la position de conduite du siège conducteur, pour un véhicule dans lequel le conducteur est toujours, et de façon continue, en position de conduite lorsque le véhicule est en marche, comme montré en figure 2. Le système ne concerne pas la phase de conduite autonome des véhicules autonomes. Le système ne concerne pas les véhicules dans lesquels le conducteur pourrait être déconnecté d'une position de conduite en cours de roulage.

Le véhicule, comme représenté en figure 2 est ainsi doté de sièges réglables, à réglage électrique, et comprend des actionneurs 3 par exemple des mécanismes de réglage de type articulations, pour régler l'inclinaison de dossier, des glissières électriques 17, des mécanismes de rehausse avec motoréducteur, pilotables sous l'action de boutons de commande 15 dédiés. L'interface homme-machine 1 envoie un signal au calculateur 2 qui déclenche les actionneurs 3.

Le calculateur 2 peut être intégré dans le siège du conducteur, les ensembles d'actionneurs 3 agissent sur l'assise et le dossier du siège conducteur et l'interface homme-machine 1 est manipulable par le conducteur. L'interface homme-machine 1 comprend par exemple des boutons latéraux de commande de siège 15 tels que représentés en figure 3, comprenant un bouton 13 commandant le déplacement longitudinal du siège sur ses glissières 17, et un bouton 14 commandant l'inclinaison du dossier 16 de siège. Alternativement cette interface peut aussi comprendre un écran capacitif disposé en position centrale et haute de la planche de bord.

L'interface peut également comprendre une commande à reconnaissance vocale, et peut comprendre un affichage tête haute pour mettre à disposition du conducteur, dans son champ visuel, des informations de vitesse, de navigation, ou d'alerte sans quitter la route des yeux.

Le déplacement est effectué au moyen des actionneurs 3 prévus à cet effet dans le siège. Ces actionneurs 3 peuvent recevoir une consigne d'activation ou d'arrêt depuis le calculateur intégré dans le siège, lequel reçoit ses instructions depuis l'interface homme-machine 1, en référence à la figure 1.

Par exemple, dans le mode de réalisation en référence à la figure 2, dans le cas d'une commande de déplacement longitudinal du siège 10 lorsque le véhicule est en marche, pour un réglage d'avant en arrière de la position de conduite du siège 10, lorsque le conducteur demande une modification de la position du siège en appuyant sur le bouton de commande du réglage longitudinal 13 pendant un temps d'activation t, aussi appelé temps d'appui, le calculateur vérifie si le temps d'appui dépasse la valeur maximale de temps de déplacement t0 et interdit, si tel est le cas, le déplacement du siège 10, au-delà de cette valeur maximale de temps de déplacement t0 pour un appui réalisé sur le bouton pendant un temps t. Ainsi le système comporte des moyens pour limiter à la valeur maximale de temps de déplacement t0 le temps de déplacement du siège td, lorsque le véhicule est en marche et lorsque la commande de réglage du siège est activée sur l'interface homme-machine pendant un temps d'activation t. Ces moyens de limitation sont placés dans le calculateur.

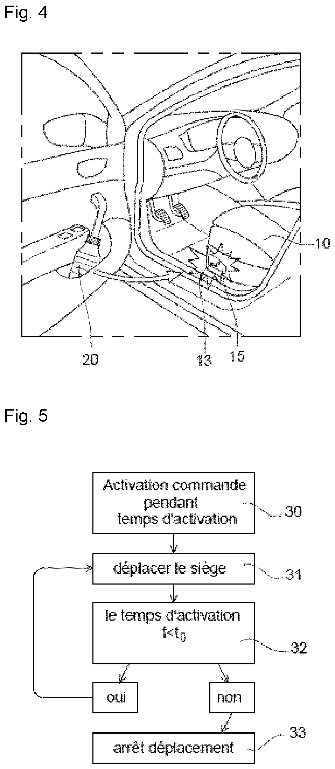

Un procédé de réglage associé au système de réglage est aussi décrit. Un ordinogramme illustrant les principales étapes d'un procédé mis en oeuvre par le dispositif selon l'invention est représenté en figure 5 : la commande de réglage est tout d'abord activée sur l'interface homme machine, ici un bouton de commande de déplacement de siège, pendant un temps d'activation (étape 30). Cette activation provoque le déplacement du siège piloté par le calculateur 2 donnant l'ordre d'agir aux actionneurs (étape 31). Le déplacement du siège, sous le contrôle du calculateur, ne continue que lorsque temps d'activation t, ou temps d'appui, est inférieur à une valeur maximale de temps de déplacement t0. Le contrôle du calculateur de cette condition est effectué continûment pendant l'appui sur l'interface homme machine par le conducteur, (étape 32)

Lorsque le conducteur actionne le bouton durant un temps t supérieur au temps t0, le siège s'arrête. (étape 33)

Le temps de déplacement du siège td est égal à t0 lorsque le temps d'activation t est supérieur à une valeur maximale de temps de déplacement t0. Le temps td de déplacement du siège est ainsi limité au bout d'un temps d'activation t supérieur à une valeur maximale de temps de déplacement t0.

La valeur t0 est une valeur de temps permettant de garder le contact avec les pédales afin de conserver les conditions de conduite sécuritaire. Dans le mode de réalisation mis en place, la valeur maximale de temps de déplacement t0 a par exemple pour valeur deux secondes.

Ainsi le siège, dans le mode de réalisation décrit d'une commande de déplacement longitudinal de siège, ne se déplacera au maximum que de deux secondes vers l'avant ou deux secondes vers l'arrière. Ce déplacement de deux secondes induit une limite temporelle de déplacement qui permet au conducteur, d'avoir un pied restant en contact avec les pédales, notamment la pédale de freinage.

Une étape d'avertissement du conducteur peut aussi être ajoutée lorsque le calculateur détecte un temps d'activation t supérieur à la valeur maximale de temps de déplacement t0, informant par exemple l'utilisateur que le réglage a été limité et que celui-ci doit appuyer à nouveau afin de pouvoir continuer le réglage souhaité. Cette alerte est inhibée si le véhicule est à l'arrêt. Simultanément, le déplacement du siège est interdit.

Ainsi si le conducteur, au moyen de l'interface homme-machine, ou avec les boutons de commande, demande la modification de sa position de conduite lorsque le véhicule est en marche, il ne peut effectivement déplacer la position de son siège que durant un temps donné de valeur maximale t0 pour un seul appui continu.

La limite temporelle t0 est active à vitesse non nulle, c'est-à-dire qu'elle est active lorsque le véhicule est en marche et pour un temps d'activation ou temps d'appui t. Elle permet de déplacer le siège vers la position demandée tout en garantissant que le pied 11 du conducteur reste en contact avec la pédale de freinage 12.

Cette limite est notamment active, lorsque, par exemple, un objet viendrait à appuyer de manière non souhaitée sur le bouton de commande de réglage longitudinal du siège. Le temps de déplacement serait alors limité à la valeur t0 et le siège s'arrêterait afin de permettre au conducteur de conserver une position de conduite sécuritaire. Ainsi, la figure 4 illustre ce cas : une bouteille 20 placée dans le rangement portière est susceptible d'appuyer de façon non souhaitée sur le bouton de commande du réglage du siège 15 lors de la fermeture de la portière ou lorsque le véhicule est en marche, suite par exemple, à un déplacement non souhaité de la bouteille 20 dans le rangement, qui viendrait provoquer l'activation du réglage de siège. L'appui non souhaité n'entraine, durant la marche du véhicule qu'un déplacement de valeur maximale de temps de déplacement t0, permettant à l'occupant de garder la maitrise du véhicule.

Le calculateur est ainsi programmé pour monitorer l'appui sur le bouton de réglage et empêcher le déplacement du siège si l'appui n'est pas relâché au bout d'un temps d'activation au delà de la valeur maximale de temps de déplacement t0. Il s'agit ainsi de s'assurer que le siège ne se déplace que dans un intervalle sécuritaire, garantissant ainsi que le pied du conducteur reste en contact avec les pédales 12. Le calculateur permet de nouveau un mouvement si l'appui bouton est relâché et si le conducteur effectue un nouvel appui. Dans ce cas, le temps du mouvement sera de nouveau limité à la valeur maximale de temps de déplacement t0 après lequel le siège se bloquera notamment si le bouton reste actionné par un appui du conducteur ou, par exemple, par un objet posé dans le rangement de la porte et qui viendrait en interférence avec le bouton. L'invention n'est pas limitée aux modes de réalisation décrits.

## Revendications

1. Système de réglage d'un siège conducteur de véhicule automobile, en particulier système de réglage de la position de conduite d'un siège conducteur de véhicule automobile, comprenant un calculateur (2), un ensemble d'actionneurs (3) de siège commandés par le calculateur et une interface homme-machine (1) reliée au calculateur (2) pour commander le réglage de siège, **caractérisé en ce qu'**il comporte des moyens pour limiter à une valeur maximale de temps de déplacement (t0) le temps de déplacement du siège (td), lorsque le véhicule est en marche et lorsque la commande de réglage du siège est activée sur l'interface homme-machine pendant un temps d'activation (t).

2. Système de réglage d'un siège conducteur de véhicule automobile selon la revendication 1 **caractérisé en ce que** l'interface homme machine est un bouton de commande et **en ce que** l'activation de la commande de réglage est réalisée par un appui pendant un temps d'activation (t) sur le bouton de commande.

3. Système de réglage d'un siège conducteur de véhicule automobile selon l'une quelconque des revendications précédentes, **caractérisé en ce que** le temps de déplacement du siège (td) est égal à la valeur maximale de temps de déplacement (t0) lorsque le temps d'activation (t) est supérieur à la valeur maximale de temps de déplacement (t0).

4. Système de réglage d'un siège conducteur de véhicule automobile selon l'une quelconque des revendications précédentes **caractérisé en ce que** la valeur maximale de temps de déplacement (t0) est égale à 2 secondes.

5. Procédé de réglage d'un siège conducteur de véhicule automobile dans lequel on commande le déplacement du siège en fonction d'une activation réalisée à partir d'une interface homme-machine (1) pendant un temps d'activation (t), **caractérisé en ce qu'**on règle le déplacement du siège lorsque le véhicule est en marche et on limite le temps de déplacement du siège (td) au bout d'un temps d'activation (t) supérieur à la valeur maximale de temps de déplacement (t0).

6. Procédé de réglage d'un siège conducteur de véhicule automobile selon la revendication 5 **caractérisé en ce que** l'interface homme machine est un bouton de commande (13, 14, 15) et **en ce que** l'activation est réalisée par un appui pendant un temps d'activation (t) sur le bouton de commande (13, 14, 15).

7. Procédé de réglage d'un siège conducteur de véhicule automobile selon l'une quelconque des revendications 5 et 6 comprenant en outre une étape d'avertissement du conducteur lorsque le calculateur détecte un temps d'activation (t) supérieur à la valeur maximale de temps de déplacement (t0).

8. Procédé de réglage d'un siège conducteur de véhicule automobile selon l'une quelconque des revendications 5 à 7 **caractérisé en ce que** la valeur maximale de temps de déplacement (t0) est égale à 2 secondes.

9. .Véhicule automobile comprenant un système de réglage d'un siège conducteur selon l'une quelconque des revendications 1 à 4.

## Patentansprüche

1. System zur Einstellung eines Fahrersitzes eines Kraftfahrzeugs, insbesondere System zur Einstellung der Fahrposition eines Fahrersitzes eines Kraftfahrzeugs, das einen Rechner (2) aufweist, eine Gruppe von Sitzaktuatoren (3), die von dem Rechner gesteuert werden, und eine Mensch-Maschine-Schnittstelle (1), die mit dem Rechner (2) verbunden ist, um die Sitzeinstellung zu steuern, **dadurch gekennzeichnet, dass** es Mittel aufweist, um die Sitzverstellzeit (td) auf einen Maximalwert der Verstellzeit (t0) zu begrenzen, wenn das Fahrzeug fährt und wenn die Sitzeinstellsteuerung an der Mensch-Maschine-Schnittstelle während einer Aktivierungszeit (t) aktiviert ist.

2. System zur Einstellung eines Fahrersitzes eines Kraftfahrzeugs nach Anspruch 1, **dadurch gekennzeichnet, dass** die Mensch-Maschine-Schnittstelle eine Bedientaste ist und dass die Aktivierung der Einstellsteuerung durch ein Drücken während einer Aktivierungszeit (t) auf die Bedientaste erfolgt.

3. System zur Einstellung eines Fahrersitzes eines Kraftfahrzeugs nach einem der vorhergehenden Ansprüche, **dadurch gekennzeichnet, dass** die Sitzverstellzeit (td) gleich dem Maximalwert der Verstellzeit (t0) ist, wenn die Aktivierungszeit (t) größer als der Maximalwert der Verstellzeit (t0) ist.

4. System zur Einstellung eines Fahrersitzes eines Kraftfahrzeugs nach einem der vorhergehenden Ansprüche, **dadurch gekennzeichnet, dass** der Maximalwert der Verstellzeit (t0) gleich 2 Sekunden ist.

5. Verfahren zur Einstellung eines Fahrersitzes eines Kraftfahrzeugs, wobei die Verstellung des Sitzes in Abhängigkeit von einer Aktivierung gesteuert wird, die ausgehend von einer Mensch-Maschine-Schnittstelle (1) während einer Aktivierungszeit (t) durchgeführt wird, **dadurch gekennzeichnet, dass** die Verstellung des Sitzes eingestellt wird, wenn das Fahrzeug in Bewegung ist, und dass die Sitzverstellzeit (td) nach einer Aktivierungszeit (t), die größer als der Maximalwert der Verstellzeit (t0) ist, begrenzt wird.

6. Verfahren zur Einstellung eines Fahrersitzes eines Kraftfahrzeugs nach Anspruch 5, **dadurch gekennzeichnet, dass** die Mensch-Maschine-Schnittstelle eine Bedientaste (13, 14, 15) ist und dass die Aktivierung durch ein Drücken während einer Aktivierungszeit (t) auf die Bedientaste (13, 14, 15) erfolgt.

7. Verfahren zur Einstellung eines Fahrersitzes eines Kraftfahrzeugs nach einem der Ansprüche 5 oder 6, das darüber hinaus einen Schritt zur Warnung des Fahrers aufweist, wenn der Rechner eine Aktivierungszeit (t) erfasst, die größer als der Maximalwert der Verstellzeit (t0) ist.

8. Verfahren zur Einstellung eines Fahrersitzes eines Kraftfahrzeugs nach einem der Ansprüche 5 bis 7, **dadurch gekennzeichnet, dass** der Maximalwert der Verstellzeit (t0) gleich 2 Sekunden ist.

9. Kraftfahrzeug mit einem System zur Einstellung eines Fahrersitzes nach einem der Ansprüche 1 bis 4.

## Claims

1. System for adjusting a driver's seat of a motor vehicle, in particular a system for adjusting the driving position of a driver's seat of a motor vehicle, comprising a computer (2), a set of seat actuators (3) controlled by the computer, and a human-machine interface (1) connected to the computer (2) for controlling the seat adjustment, **characterized in that** the system comprises means for limiting the seat movement time (td) to a maximum movement time value (t0), when the vehicle is moving and when the seat adjustment control is activated on the human-machine interface for an activation time (t).

2. System for adjusting a driver's seat of a motor vehicle according to Claim 1, **characterized in that** the human-machine interface is a control button and **in that** the activation of the adjustment control is carried out by the control button being pressed for an activation time (t).

3. System for adjusting a driver's seat of a motor vehicle according to either one of the preceding claims, **characterized in that** the seat movement time (td) is equal to the maximum movement time value (t0) when the activation time (t) is greater than the maximum movement time value (t0).

4. System for adjusting a driver's seat of a motor vehicle according to any one of the preceding claims, **characterized in that** the maximum movement time value (t0) is equal to 2 seconds.

5. Method for adjusting a driver's seat of a motor vehicle, wherein the movement of the seat is controlled on the basis of an activation carried out from a human-machine interface (1) for an activation time (t), **characterized in that** the movement of the seat is adjusted when the vehicle is moving and the seat movement time (td) is limited after an activation time (t) greater than the maximum movement time value (t0).

6. Method for adjusting a driver's seat of a motor vehicle according to Claim 5, **characterized in that** the human-machine interface is a control button (13, 14, 15) and **in that** the activation is carried out by the control button (13, 14, 15) being pressed for an activation time (t) .

7. Method for adjusting a driver's seat of a motor vehicle according to either one of Claims 5 and 6, further comprising a step of warning the driver when the computer detects an activation time (t) greater than the maximum movement time value (t0).

8. Method for adjusting a driver's seat of a motor vehicle according to any one of Claims 5 to 7, **characterized in that** the maximum movement time value (t0) is equal to 2 seconds.

9. Motor vehicle comprising a system for adjusting a driver's seat according to any one of Claims 1 to 4.
